# EUROPÄISCHE PATENTSCHRIFT

(11) **EP 3 371 662 B1**
(45) Veröffentlichungstag und Bekanntmachung des Hinweises auf die Patenterteilung: **06.10.2021**
(21) Anmeldenummer: 15791282.5
(22) Anmeldetag: 03.11.2015
(51) Int. Cl.: G05B 19/042, F15B 13/08

(54) **APPLIKATIONSBASIERTE STEUERUNG VON PNEUMATISCHEN VENTILANORDNUNGEN**
APPLICATION-BASED CONTROL OF PNEUMATIC VALVE ASSEMBLIES
DISPOSITIF DE COMMANDE D'ENSEMBLES DE VANNES PNEUMATIQUES EN FONCTION DE L'APPLICATION

(43) Veröffentlichungstag der Anmeldung: 12.09.2018
(73) Patentinhaber: Festo SE & Co. KG, 73734 Esslingen (DE)
(72) Erfinder: HOFMANN, Peter, 71120 Grafenau-Doeffingen (DE); NEUMANN, Rüdiger, 73760 Ostfildern (DE); ELMER, Stefan, 74629 Pfedelbach (DE); DOLL, Matthias, 73249 Wernau (DE); SCHNEIDER, Bernd, 71093 Weil im Schoenbuch (DE)
(74) Vertreter: Schwarz, Claudia
(86) Internationale Anmeldenummer: PCT/EP2015/075584
(87) Internationale Veröffentlichungsnummer: WO 2017/076430

(56) Entgegenhaltungen:
- EP-A1- 1 975 418
- WO-A1-98/25189
- WO-A1-2013/107466
- DE-U1- 20 006 295

## Beschreibung

Die vorliegende Erfindung liegt auf dem Gebiet der Elektropneumatik und betrifft insbesondere einen elektronischen Ventil-Controller zur Steuerung und Regelung einer pneumatischen Bewegungsaufgabe, die mit einer Ventilanordnung ausgeführt werden soll, eine Ventilanordnung, die mit einem Ventil-Controller gesteuert und geregelt wird sowie ein Verfahren zur Steuerung und Regelung einer Ventilanordnung und ein pneumatisches Bewegungssteuerungssystem.

Im Stand der Technik ist es bekannt, fluidisch betreibbare Aktoren über eine elektronische Steuereinrichtung, z.B. in Form einer speicherprogrammierbaren Steuerung, anzusteuern, indem ein Ansteuersignal von einer Steuerelektronik an eine Ventileinrichtung bereitgestellt wird. Dabei kann die speicherprogrammierbare Steuerung dazu dienen, vorkonfigurierte Sollwerte bereitzustellen, die zur Steuerung der Ventilfunktionen auswählbar sind.

Aus der WO 2013/107 466 ist es bekannt, eine Fluidsteuereinheit mit einzelnen Fluidsteuerventilen spezifisch zu konfigurieren. Dazu müssen pneumatische Parameter über die Fluidsteuerventile und eine Kolben/Zylinder-Anordnung, auf der eine Bewegungsaufgabe ausgeführt werden soll, erfasst werden. Nach Bestimmung einer Ventilfunktion durch einen Anwender, kann eine Konfigurationsdatei erstellt werden, die Steuer- und Regelparameter für die Ansteuerung der Ventilscheibe enthält.

Die Druckschrift DE 200 06 295 U1 offenbart eine Ventileinheit, die elektrisch betätigbare Ventile aufweist, und eine programmierbare Steuereinrichtung.

Die Druckschrift EP1975418 A1 offenbart eine Ventilbatterie mit Ventilmodulen zur fluidtechnischen Ansteuerung fluidtechnischer Geräte.

Als nachteilig hat es sich dabei erwiesen, dass die Menge der ausführbaren pneumatischen Bewegungsaufgaben bereits vorkonfiguriert ist. Das bisherige System erweist sich somit nicht flexibel genug, um unterschiedliche technische Anwendungen umsetzen zu können.

Die vorliegende Erfindung hat sich deshalb zur Aufgabe gestellt, ein pneumatisches System hinsichtlich der Flexibilität und der Regelungsmöglichkeiten zu verbessern. Des Weiteren sollen die Kosten und der erforderliche Installationsaufwand gesenkt werden.

Diese Aufgabe wird jeweils durch einen Gegenstand nach den nebengeordneten Ansprüchen gelöst. Vorteilhafte Ausführungsformen sind Gegenstand der abhängigen Ansprüche, der Beschreibung und der Zeichnungen.

Nachstehend wird die Lösung der Aufgabe anhand des elektronischen Ventil-Controllers beschriebenen. Dabei erwähnte Merkmale, Vorteile oder alternative Ausführungsformen sind ebenso auch auf die anderen beanspruchten Gegenstände zu übertragen und umgekehrt. Mit anderen Worten kann auch der Verfahrensanspruch mit den Merkmalen weitergebildet sein, die in Zusammenhang mit den gegenständlichen Ansprüchen beschrieben oder beansprucht sind. Die entsprechenden funktionalen Merkmale des Verfahrens werden dabei durch entsprechende Hardware-Module, insbesondere Mikroprozessor-Module, der Vorrichtung (bzw. des Systems oder des Produktes) ausgebildet und umgekehrt.

Gemäß einem ersten Aspekt wird die vorstehende Aufgabe gelöst durch einen elektronischen Ventil-Controller zur Steuerung und Regelung einer Ventilanordnung mit zumindest einem pneumatischen Ventil für eine pneumatische Bewegungsaufgabe. Erfindungsgemäß ist auf dem elektronischen Ventil-Controller eine Applikation aus einer Menge von bereitgestellten, unterschiedlichen Applikationen zur Steuerung und Regelung der Ventilanordnung ausführbar geladen oder ladbar, um die pneumatische Bewegungsaufgabe auszuführen.

Die Applikation wird als ausführbarer Programmcode *(executable)* erzeugt und ist direkt auf der Ventilinsel einlesbar und verwendbar bzw. ausführbar. Die Applikation umfasst Steuerbefehle für die Ventilanordnung. Es ist nicht notwendig, noch eine weitere elektronische Instanz dazwischenzuschalten. Auf einer Berechnungseinheit werden in einer Code-Erzeugungsphase - je nach gewünschter Bewegungsaufgabe bzw. Ventilfunktion - unterschiedliche Applikationen erzeugt und als Menge von Applikationen zur Auswahl durch einen Anwender bereitgestellt. Der Anwender kann in einer Ausführphase dann zumindest eine bestimmte Applikation aus der Menge von Applikationen zur Steuerung und Regelung der jeweiligen konkreten Bewegungsaufgabe auswählen. Es sei ausdrücklich darauf hingewiesen, dass er auch mehrere Applikationen aus der Menge der verfügbaren Applikationen zur Steuerung/Regelung auswählen kann. Die Berechnungseinheit kann zur Generierung der Applikation auf ein Modell und auf eine Bibliothek aus Applikationsobjekten zugreifen. Die Applikation kann auf einer oder auf mehreren Ausführungseinheiten (als verteiltes System) ausgeführt werden. In einer bevorzugten Ausführung ist die Ausführungseinheit der elektronische Ventil-Controller. Alternativ oder kumulativ kann als Ausführungseinheit jedoch auch eine weitere elektronische Instanz mit den entsprechenden technischen Voraussetzungen (Prozessorleistung, Speicherplatz, Eingabe-, Ausgabe-Ports bzw. Schnittstellen etc.) dienen, z.B. ein Mikrocontroller einer Ventilscheibe oder ein Steuerungsgerät in Form einer speicherprogrammierbaren Steuerung. Mit anderen Worten kann die jeweilige Ausführungseinheit wiederum als verteiltes System ausgebildet sein.

Gemäß einer bevorzugten Ausführungsform handelt es sich bei der Ventilanordnung um eine sogenannte Ventilinsel, die mehrere, insbesondere 4 oder 8 Ventilscheiben umfasst, wobei die Ventilscheiben einen identischen Aufbau aufweisen können und zentral über den elektronischen Ventil-Controller gesteuert und geregelt werden. Der elektronische Ventil-Controller ist ebenfalls lokal auf der Ventilinsel angeordnet. Alternativ kann er als verteiltes System ausgebildet sein, wobei die einzelnen Controller-Module in Datenaustausch stehen. Die Controller Module können beispielsweise auf den Ventilscheiben als Mikrocontroller ausgebildet sein.

Die einzelnen Ventilscheiben einer Ventilinsel sind Ventilmodule mit vier Ventilen. Die Ventile sind Stellglieder zur Steuerung der Arbeitsglieder oder -geräte (wie z.B. einer Kolben/Zylinder Anordnung). Die Ventilscheiben können jeweils unterschiedliche Bewegungsarten, Bewegungsaufgaben bzw. pneumatische Funktionen ausführen und somit unterschiedlich angesteuert werden. Es ist auch möglich, dass ein und dieselbe Ventilscheibe sequentiell unterschiedliche Teil-Bewegungsaufgaben in unterschiedlichen Ausführungsarten (gedrosselt, schallgedämpft etc.) (Tasks) ausführt und entsprechend angesteuert wird. Die Ventilscheiben einer Ventilinsel können im selben Zeitintervall unterschiedliche Bewegungsarten und Bewegungsaufgaben parallel ausführen. Die Bewegungsaufgabe umfasst somit auch einen regelbaren Ausführungsmodus, eine Bewegungsart, (gedrosselt, energieeffizient, etc.), die vom Anwender eingestellt werden kann.

Eine Ventilscheibe umfasst seinerseits einen elektronischen Ventilscheibencontroller, der zur Ansteuerung der vier Ventile der Ventilscheibe dient. Diese vier Ventile sind nach Art einer elektrischen Wheatstone-Brücke verschaltet, um höherwertige Ventilfunktionen bereitstellen bzw. ausführen zu können.

Gemäß einer vorteilhaften Weiterbildung der Erfindung verfügt der elektronische Ventil-Controller über mehrere Schnittstellen, umfassend pneumatische Anschlüsse und elektrische Anschlüsse sowie über Datenanschlüsse, die als (möglicherweise unterschiedliche) Bussysteme ausgebildet sein können, die mit verschiedenen Protokollen betrieben werden können. Der elektronische Ventil-Controller umfasst insbesondere eine Schnittstelle zu einer Berechnungseinheit, die vorzugsweise als bidirektionale Schnittstelle zum Datenaustausch ausgebildet ist. Die Berechnungseinheit dient dazu, die Applikation auf Basis der über einen Editor oder über ein sonstiges Eingabemittel (elektronisch, akustisch, optisch etc.) eingegebenen Bewegungsaufgabe zu realisieren. Das Erzeugen der Applikation wird in der Code-Erzeugungsphase ausgeführt. In einer einfachen Variante der Erfindung werden alle auswählbaren Applikationen in dieser Code-Erzeugungsphase erzeugt und können - je nach Anwendung - durch den Anwender ausgewählt und zur Ausführung auf eine oder mehrere der Ausführungseinheiten geladen werden. Eine modifizierte Version einer bereits ausgewählten und geladenen Applikation kann in der Ausführphase erzeugt werden, indem die Applikation entsprechend SOLL-Vorgaben adaptiv parametrisiert wird. Es ist nicht notwendig, die Applikation erneut auf eine der Ausführungseinheiten zu laden.

Zweckmäßig ist es, wenn auf dem elektronischen Ventil-Controller eine interne Messsignaleinheit integriert ist, über die der elektronische Ventil-Controller interne oder lokale Messsignale der Ventilanordnung, insbesondere der Ventilinsel mit allen Ventilscheiben empfängt und zur Regelung verrechnet. Die Verrechnung erfolgt vorzugsweise direkt auf dem elektronischer Ventil-Controller. Alternativ können die Regelgrößen über eine Regelungsschnittstelle an die Berechnungseinheit zur dortigen Verarbeitung weitergeleitet werden. Dies hat den Vorteil, dass das Ausführen der Bewegungsaufgabe quasi in Echtzeit anhand der erfassten und vordefinierbaren pneumatischen Bedingungen geregelt werden kann. Vorzugsweise kann der Anwender im Vorfeld bestimmen, welche physikalischen Bedingungen er zur Regelung berücksichtigt wissen möchte (z.B. Temperatur, Energie, Durchfluss etc.). Diese Regelgrößen werden nach ebenfalls vordefinierbaren Ereignissen (zeitbasierte Ereignisse, z.B. periodisch oder zustandsbasierte Ereignisse, z.B. nach Ausführen eines bestimmten Bewegungssequenz der Bewegungsaufgabe) erfasst und zur Regelung an die Berechnungseinheit oder Ausführungseinheit(en) weitergeleitet. Vorteilhaft erweist es sich dabei, dass somit nicht nur die Messsignale einer Ventilscheibe berücksichtigt werden können, sondern auch die Messsignale der parallel im Einsatz befindlichen Ventilscheiben derselben Ventilinsel oder der Baugruppe aus Ventilscheiben sowie interne Sensorsignale einer Kolben-Zylinderanordnung.

In einer bevorzugten Ausführungsform der Erfindung erfolgt die Regelung der Ventile der Ventilinsel zur Ausführung der Bewegungsaufgabe aufgrund von internen Messsignalen der Ventilinsel, also Messsignalen oder Sensorsignalen, die auf der Ventilinsel erfasst werden und aufgrund von externen Prozesssignalen und/oder externen Regelgrößen und/oder externen Messsignalen. Wie bereits erwähnt, können bei den internen Messsignalen durchaus Messsignale von unterschiedlichen Ventilscheiben erfasst werden, die mit einer Zuordnung zu der jeweiligen Ventilscheibe an die Berechnungseinheit oder Ausführungseinheit(en) zum Zwecke der Regelung weitergeleitet werden. Damit kann vorteilhafterweise eine ventilscheiben-spezifische Regelung ausgeführt werden. Bei den externen Parametern (externe Prozesssignale, Regelgrößen, Messsignalen) kann es sich um pneumatisch relevante physikalische Parameter handeln, die außerhalb der Ventilinsel erfasst oder bereitgestellt werden, z.B. um Vorgaben zum Energieverbrauch, zur Erschütterungsfreiheit oder zur Geräuschentwicklung. Bei den externen Größen handelt es sich vorzugsweise um Prozesssignale des technischen Prozesses, in dessen Kontext die Bewegungsaufgabe ausgeführt werden soll (also z.B. Füllstandsignale oder Positionssignale des Fertigungsprozesses zur Bewegung von Bauteilen mittels der pneumatischen Ventilanordnung oder z.B. Signale eines zu bewegenden Roboters etc.). Eine Regelschaltung oder ein entsprechender Regelalgorithmus ist bereitgestellt, um die erfassten IST-Vorgaben (dies sind üblicherweise auch kontinuierliche Signale oder Signal- oder Kurvenverläufe) der jeweiligen Regelparameter mit vordefinierbaren SOLL-Vorgaben auf Übereinstimmung zu vergleichen und entsprechend zu regeln. Da diese Regelgrößen sich von Anwendungsfall zu Anwendungsfall unterscheiden, ist es in einem Ausführungsbeispiel vorgesehen, dass die externen und internen Regelgrößen im Vorfeld und insbesondere in einer Code-Erzeugungsphase definiert werden können, damit nicht unnötige Messwerte erfasst und verarbeitet werden müssen, sondern nur diejenigen, die für die jeweilige Anwendung relevant sind.

In einfacheren Ausführungsformen kann die Regelung nur aufgrund der internen oder der externen Regelgrößen ausgeführt werden.

Grundsätzlich führt die Regelung dazu, dass eine veränderte Applikation erstellt wird, indem die Applikation mit berechneten SOLL-Vorgaben parametrisiert wird und in dieser parametrisierten Version auf den Ausführungseinheiten zur Ausführung gebracht wird. In einer Weiterbildung ist es vorgesehen, das datentechnische System zur Erzeugung der Applikation, insbesondere eine sogenannte Berechnungseinheit oder die Ausführungseinheit, als selbstlernendes System auszubilden. In diesem Fall wird während der Ausführung der Bewegungsaufgabe eine Feedback- und Diagnose-Information erfasst (vorzugsweise auf Ausführungseinheiten, auf denen die Applikation ausgeführt wird, also z.B. auf der Ventilinsel oder auf mit den Ausführungseinheiten in Datenaustausch stehenden Einheiten), die an die Berechnungseinheit zur Erzeugung oder Parametrisierung der Applikation weitergeleitet wird. Mit anderen Worten kann die Ventilanordnung während der Ausführung der intendierten Bewegungsaufgabe auch von unterschiedlichen Versionen der Applikation gesteuert werden, wobei unterschiedliche Versionen oder Parametrisierungen einer Applikation auf der Berücksichtigung von Regelgrößen basieren.

In einer ersten Ausführungsform wird die erzeugte Applikation direkt auf den elektronischen Ventil-Controller zur Ausführung geladen. In diesem Fall ist der Einsatz einer weiteren Steuerungseinheit, z.B. einer speicherprogrammierbaren Steuerung, nicht mehr zwingend. Es kann jedoch durchaus möglich sein, optional zusätzlich noch eine externe Steuereinheit in das System einzubinden, z.B. in Form einer speicherprogrammieren Steuerung. In diesem Fall wird die auf den elektronischen Ventil-Controller geladene Applikation in ein auf der speicherprogrammieren Steuerung vorgesehenes Steuerungsprogramm für die jeweilige Ventilinsel eingebunden. Damit kann die Ausführung der Applikation auf dem elektronischen Ventil-Controller über die speicherprogrammieren Steuerung getriggert also ausgelöst werden, insbesondere durch Anfangssteuerbefehle und Endsteuerbefehle und ggf. durch ein Not-Aus im Fall eines Notfalls. Die Steuerungsaufgabe und die Regelungsaufgabe für die Ventilinsel werden somit erfindungsgemäß nicht mehr indirekt durch die speicherprogrammierbare Steuerung umgesetzt und ausgeführt (selbst dann nicht, wenn diese verwendet wird), sondern direkt durch den elektronischen Ventil-Controller auf der Ventilinsel und somit lokal auf der Ventilinsel. Damit kann vorteilhafterweise sozusagen intelligente Funktionalität zur Steuerung und Regelung direkt vor Ort auf die Ventilinsel verlagert werden. In einer anderen Ausführungsform können auf dem digitalen programmierbaren Steuergerät noch weitere Steuerapplikationen bereitgestellt werden, die zur Ausführung der pneumatischen Bewegungsaufgabe auf den elektronischen Ventil-Controller geladen werden können. Üblicherweise dient die speicherprogrammierbare Steuerung jedoch nur zur Ausführung von übergeordneten Funktionen und zur Koordination mit anderen Einheiten des technischen Anwendungssystems (Robotersteuerung etc.). Die speicherprogrammiere Steuerung koordiniert dann die Bewegungsabläufe in Zusammenhang mit z.B. elektrischen Antrieben, um z.B. einen Zusammenstoß bei einem NOT-Aus zu vermeiden.

In einer zweiten Ausführungsform wird die erzeugte Applikation nicht direkt auf den elektronischen Ventil-Controller zur Ausführung geladen, sondern auf das digitale programmierbare Steuergerät. Dieses überträgt dann die Steuerbefehle an eine Ausführungseinheit, insbesondere an den elektronischen Ventil-Controller. Die Steuerbefehle können in einen ausführbaren Programmcode eingebunden sein, mit dem beispielsweise auch die Erfassung von spezifischen Messwerten als Regelgrößen veranlasst wird.

Gemäß einem weiteren Aspekt wird die vorstehende Aufgabe gelöst durch eine Ausführungseinheit, auf der die erzeugten Applikation geladen ist und ausgeführt wird. Dabei handelt es sich um elektronische oder digitale Prozessoreinheiten, die auf einer Ventilanordnung und insbesondere auf einer Ventilinsel ausgebildet sind, insbesondere um den elektronischen Ventil-Controller, eine Steuereinheit (Mikrocontroller) auf einer einzelnen Ventilscheibe oder um eine Instanz, die in Datenaustausch mit der speicherprogrammierbaren Steuerung oder der Berechnungseinheit steht.

Gemäß einem weiteren Aspekt wird die vorstehende Aufgabe gelöst durch ein Verfahren zur Steuerung und Regelung einer pneumatischen Ventilanordnung zur Ausführung einer pneumatischen Bewegungsaufgabe, umfassend folgende Verfahrensschritte:
- Einlesen der pneumatischen Bewegungsaufgabe
- Automatisches Erzeugen eines ausführbaren Programmcodes auf Basis der erfassten pneumatischen Bewegungsaufgabe unter Zugriff auf eine Bibliothek aus Applikationsobjekten und Verteilen der einzelnen Applikationsobjekte auf zumindest eine oder mehrere Ausführungseinheit(en) der Ventilanordnung
- Laden des ausführbaren Programmcodes als Applikation in Echtzeit auf zumindest einer oder mehreren Ausführungseinheit(en) der Ventilanordnung. Üblicherweise schließt sich an den Vorgang des Ladens auch eine Ausführung der Applikation an.

Vorzugsweise werden während der Ausführung der Applikation (und damit während der Ausführung der Bewegungsaufgabe mittels der Ventilanordnung) erfasste interne Messsignale der Ventilinsel und der Ventilscheibe (Ventilanordnung) und externe Prozesssignale des technischen Systems als pneumatische Regelgrößen an eine Ausführungseinheit weitergeleitet, um eine modifizierte Applikation, nämlich eine parametrisierte Applikation (bzw. eine andere Version der Applikation) zu erzeugen und diese auf die Ausführungseinheiten (z.B. den elektronischen Ventil-Controller) zum Zwecke der Ausführung zu laden. Dieser Vorgang kann in Echtzeit und insbesondere in einem Bereich von 0,5 Millisekunden bis 5 Millisekunden ausgeführt werden, so dass die parametrisierte Applikation in Echtzeit auf den Ausführungseinheiten bereit steht. Auch im Fall des Erstellens einer modifizierten Applikation (also einer geregelten Applikation) kann diese in Echtzeit auf die Ausführungseinheiten geladen werden. Dies gilt auch für eine durch Feedback modifizierte Applikation.

In der Praxis hat es sich als sinnvoll erwiesen, dass zur Steuerung oder Regelung der Ventilanordnung folgende Betriebsbedingungen, also Ausführungsmodi oder Bewegungsvarianten, berücksichtigt werden, die auch kombiniert ausgewählt und angewendet werden können. Sie können z.B. auch in Form eines Plug-Ins auf einer Benutzeroberfläche, z.B. der Berechnungseinheit oder einem anderen Gerät, zur Auswahl angezeigt werden:
- Dämpfung einer Kolbenbewegung durch Bereitstellen einer Dämpfungsfunktion, insbesondere eines Soft Stopps,
- Geschwindigkeitsregelung eines Kolbens durch Bereitstellen einer Drosselfunktion zur Steuerung der Kolbengeschwindigkeit,
- Bereitstellen einer Druckkontrolle und/oder einer Druckverlaufskontrolle,
- Ausführungszeit der Bewegungsaufgabe,
- Energieeffizienz der Bewegungsaufgabe,
- Vorgabe der Ventilfunktion
- Bewegung mit Zwischenstopps und/oder separaten Bewegungsabschnitten
- Bewegungsaufgabe zum Zweck der Diagnose und
- Weiteren Kriterien, die für die jeweilige Anwendung relevant sein können, wie z.B. eine Erschütterungsfreiheit, eine Wärmeentwicklung, ein Stromverbrauch und/oder eine Schallemission bei Ausführen der Bewegungsaufgabe etc.

Mit dem Verfahren kann die Ventilanordnung gesteuert und geregelt werden. Es ist auch möglich, die Ventilfunktion vorzugeben. Dazu kann eine bestimmte Applikation aus einer bereitgestellten Menge von Applikationen ausgewählt werden, die dann auf die Ausführungseinheiten geladen wird.

Zur Regelung der Ventilanordnung werden vorzugsweise interne (ventilinselinterne) Messsignale der Ventilanordnung und externe (ventilinselexterne) Regelgrößen berücksichtigt. Es sind mindestens zwei separate Regelkreise vorgesehen: Ein erster Regelkreis befindet sich auf der jeweiligen Ventilscheibe und regelt die vier jeweiligen Ventile der Ventilscheibe auf Basis von auf der Ventilscheibe bzw. an den jeweiligen Ventilen angeordneten Sensoren (z.B. Druck- oder Positionssensor). Ein zweiter Regelkreis ist auf dem elektronischen Ventil-Controller vorgesehen. Dieser regelt das Verhalten aller Ventilscheiben der Ventilinsel, auch in Bezug zueinander. Er kann interne Messsignale einer internen Messsignaleinheit verarbeiten. In einer weiteren Ausführungsform der Erfindung kann ein dritter Regelkreis vorgesehen sein. Der dritte Regelkreis kann sich außerhalb der Ventilinsel auf einem elektronischen Bauteil oder auf der speicherprogrammierbaren Steuerung befinden und kann externe Sensorsignale verarbeiten, z.B. Drucksignale oder andere Sensorsignale (Temperatur etc.), die dann z.B. einen Aktor (Greifer) an eine bestimmte Position bewegen, um im Falle eines NOT-Aus keine Kollision zu bewirken. Dabei werden Prozesssignale einer externen Sensoreinheit verarbeitet. Auf der speicherprogrammierbaren Steuerung kann auch die richtige Reihenfolge der jeweiligen Bewegungsaufgaben der einzelnen Ventilscheiben der Ventilinsel über entsprechende Befehle gesteuert werden (z.B. "Fahre Zylinder 1 von A nach B und nach einem Zeitintervall von 5 Sekunden fahre Zylinder 1 gedrosselt von B nach C und Zylinder 2 von A nach D"). In einer weiteren Ausführungsform der Erfindung kann ein vierter Regelkreis implementiert sein, der die Applikation anhand der Vorgaben des Anwenders zum Ausführungsmodus der Bewegungsaufgabe (gedämpft, geräuschreduziert etc.) anpasst oder parametrisiert. Die Vorgaben werden über eine Benutzerschnittstelle eingegeben und dann vorzugsweise automatisch mittels eines Algorithmus in SOLL-Vorgaben verrechnet, die zur Parametrisierung der Applikation verwendet werden. Die Applikation umfasst dabei 2 Segmente: einen Hauptteil und einen Sollvorgaben-abhängigen Teil, der durch entsprechende Sollvorgaben unterschiedlich parametrisiert wird. Der Hauptteil der Applikation bleibt auch bei einer Parametrisierung unverändert. Dies hat den Vorteil, dass auch bei einer Änderung des Ausführungsmodus der Bewegungsaufgabe oder bei veränderten Regelgrößen keine erneute Kompilierung und kein wiederholtes Laden der Applikation erforderlich sind. Damit können die Prozesskosten und der Verwaltungsaufwand deutlich reduziert werden. Dieser übergeordnete Regelkreis kann durch eine Neugenerierung und anschließendes Herunterladen einer Applikation auf die Ausführungseinheit(en) erstellt werden.

Gemäß einem weiteren Aspekt wird die vorstehende Aufgabe gelöst durch ein pneumatisches Bewegungssteuerungssystem zur Steuerung und Regelung einer pneumatischen Ventilanordnung zur Ausführung einer pneumatischen Bewegungsaufgabe, umfassend:
- Einen Editor als Benutzerschnittstelle zur Erfassung der pneumatischen Bewegungsaufgabe;
- Eine Berechnungseinheit, die ausgelegt ist, um auf Basis der erfassten pneumatischen Bewegungsaufgabe einen ausführbaren Programmcode zu generieren oder einen bereits generierten Programmcode auszuwählen, der als Applikation bereitgestellt wird und diesen anhand von Regelungsdaten und/oder von Prozesssignalen zu parametrisieren;
- Zumindest eine Ausführungseinheit, die auf der Ventilanordnung angeordnet und jeweils dazu ausgelegt ist, die Applikation einzulesen und diese auszuführen, um die Ventilanordnung gemäß der erfassten Bewegungsaufgabe zu steuern und/oder auf Basis von internen und Regelgrößen zu regeln.

Das pneumatische Bewegungssteuerungssystem umfasst zumindest eine interne Messsignaleinheit, die zur Erfassung von internen oder lokalen Messsignalen der Ventilanordnung dient, die in Echtzeit zur Erzeugung des ausführbaren Programmcodes zur Regelung der pneumatischen Bewegungsaufgabe verwendet werden. Vorzugsweise umfasst jede Ventilinsel eine solche Messsignaleinheit.

Die Berechnungseinheit des pneumatischen Bewegungssteuerungssystem umfasst vorzugsweise:
- Einen Interpreter, der dazu ausgebildet ist, die erfasste Bewegungsaufgabe in eine Folge von Tasks zu zerlegen;
- Einen Kompositeur, der dazu ausgebildet ist, auf einen Speicher mit gespeicherten Applikationsobjekten zuzugreifen, um für jeweils einen Task aus der Gesamtmenge von Tasks die für diesen Task notwendigen Applikationsobjekte auszuwählen, um daraus einen ausführbaren Programmcode zu erzeugen;
- Einen Distributor, der dazu ausgebildet ist, den erzeugten ausführbaren Programmcode auf zumindest eine Ausführungseinheit zu verteilen und dort zu laden;
- Einen Executor, der vorzugsweise als Ausführungseinheit dazu ausgebildet ist, den erzeugten ausführbaren Programmcode in Echtzeit auszuführen und der gegebenenfalls dazu ausgebildet ist, interne Messsignale als Regelgrößen zu erfassen und zur Erzeugung eines modifizierten (parametrisierten) ausführbaren Programmcodes zurückzuführen.

Und fakultativ:
- Einen Matcher, der dazu ausgebildet ist, auf einen Lizenz-Speicher und/oder einen externen Speicher (Datenbank) zuzugreifen, in dem eine Bibliothek von lizenzbedürftigen Applikationsobjekten hinterlegt ist. Der Matcher dient zur kontinuierlichen Optimierung der Applikationserzeugung. Üblicherweise greift der Kompositeur zur Applikationserzeugung auf den internen Speicher mit Applikationsobjekten zu, indem bereits lizensierte oder lizenzfreie Applikationsobjekte liegen. Das System kann jedoch zur Optimierung auf eine externe Speicherinstanz, die als Cloud-Lösung ausgelegt sein kann, zugreifen, in der sich lizenz-bedürftige Applikationsobjekte befinden. Diese müssen erst durch eine weitere Maßnahme des Anwenders (nach Anzeige auf der Benutzeroberfläche und Zustimmung zu den Lizenzbedingungen) lizensiert werden, um zur Applikationserzeugung zur Verfügung zu stehen. Die Applikationsobjekte in dem externen Speicher umfassen auch solche Applikationsobjekte, die für unterschiedliche Bedingungen und Kriterien optimiert sind.

Eine weitere Verbesserung kann erzielt werden, wenn das pneumatische Bewegungssteuerungssystem ein Optimierungsmodul umfasst, das zur Optimierung und/oder Regelung der pneumatischen Bewegungsaufgabe ausgelegt ist, indem bei der Generierung des ausführbaren Programmcodes vordefinierbare Optimierungskriterien berücksichtigt werden. Als vordefinierbare Optimierungskriterien können zeitbezogene Kriterien (Dauer, Schnelligkeit), eine Energieeffizienz, Schall- oder Wärmeentwicklung etc. dienen.

Eine weitere Aufgabenlösung sieht ein Computerprogramm vor, mit Computerprogrammcode zur Durchführung aller Verfahrensschritte des oben näher beschriebenen Verfahrens, wenn das Computerprogramm auf einem Computer ausgeführt wird. Dabei ist es auch möglich, dass das Computerprogramm auf einem von einem Computer lesbaren Medium gespeichert ist und als Computerprogrammprodukt vertrieben wird.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- Fig. 1: zeigt eine schematische Darstellung eines pneumatischen Systems gemäß einer vorteilhaften Ausführungsform der Erfindung.
- Fig. 2: ist eine Explosionsdarstellung einer Ventilscheibe in einem Ausführungsbeispiel.
- Fig. 3: zeigt weitere Bauteile einer Ventilscheibe.
- Fig. 4a: ist eine Ventilinsel mit vier Ventilscheiben in einer schematischen beispielhaften Darstellung und
- Fig. 4b: eine Ventilinsel mit acht Ventilscheiben.
- Fig. 5: zeigt in einer Übersichtsdarstellung Bauteile des pneumatischen Systems gemäß einer vorteilhaften Ausführungsform der Erfindung und deren Zusammenwirken.
- Fig.6: zeigt eine schematische Darstellung unterschiedlicher Regelkreise zur Regelung der Ventilanordnung.

### Detaillierte Beschreibung der Figuren

Im Folgenden wir die Erfindung unter Bezugnahme auf die Figuren näher beschrieben.

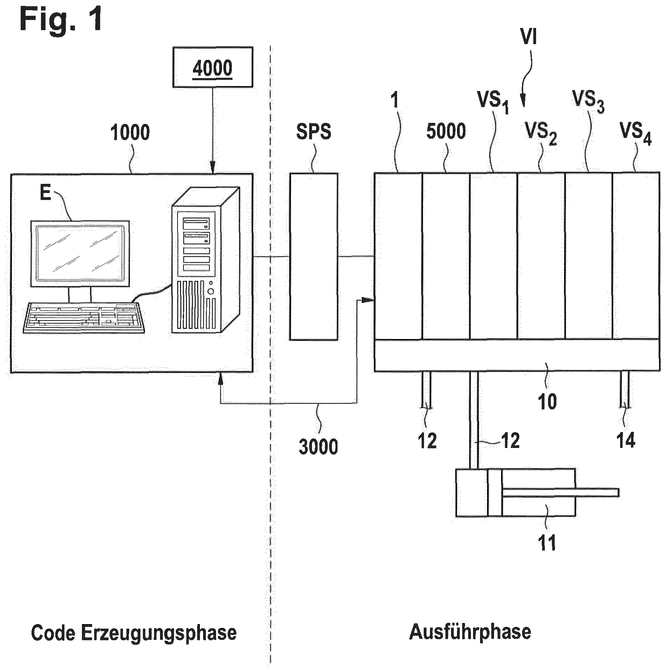

**Figur 1** zeigt in einer schematischen Übersichtsdarstellung Komponenten eines elektropneumatischen Systems gemäß einer vorteilhaften Ausführungsform der Erfindung. Eine Berechnungseinheit 1000 umfasst einen Prozessor zur Berechnung und umfasst oder ist angeschlossen an einen Monitor, der als Editor E für die Eingabe von Bewegungsaufgaben ausgebildet sein kann. Die Berechnungseinheit 1000 kann eine Computereinheit sein, die in Fig. 1 auf der linken Seite beispielhaft dargestellt ist, wie ein Personal Computer oder ein Netz aus mehreren über ein Netzwerk verbundener Computerinstanzen. Für den Fachmann liegt es erkennbar ebenso im Rahmen der Anmeldung, andere Ausbildungen der Berechnungseinheit 1000 vorzusehen, wie z.B. mobile Datenverarbeitungsgeräte, wie ein Tablet, ein Handheld, ein Smartphone, einen Laptop oder dergleichen, die auch kombiniert als verteiltes System zum Einsatz kommen können. Die jeweiligen Geräte der Berechnungseinheit 1000 können über ein Netzwerk (LAN, WLAN, etc.) an weitere digitale und/oder elektronische Instanzen des Systems (SPS; elektronischer Ventil-Controller 1 etc.) angebunden sein. Die Berechnungseinheit 1000 kann fakultativ in einem Ausführungsbeispiel mit einem speicherprogrammierbaren Steuergerät SPS in Datenaustausch stehen; dies ist jedoch nicht zwingend erforderlich.

Grundsätzlich zielt die Erfindung darauf ab, pneumatische Ventile einer Ventilanordnung adaptiv anzusteuern, um unterschiedliche Anwendungsszenarien abdecken zu können und um bei der Ausführung der Ventilbewegung erfasste Regelgrößen bei der weiteren Ansteuerung berücksichtigen zu können. Dazu wird abhängig von der jeweiligen Bewegungsaufgabe des Anwendungsfalls mit weiteren technischen Kriterien (z.B. Anforderungen an die Ausführungszeit, den Energieverbrauch etc.) in einer ersten Code-Erzeugungsphase ein Programmcode erzeugt, der als Applikation A auf Ausführungseinheiten des elektropneumatischen Systems, wie z.B. auf einem elektronischen Ventilinsel-Controller 1, einem speicherprogrammierbaren Steuergerät SPS oder auf einem Mikrocontroller 124 ausgeführt werden kann. Die Applikation A enthält dazu u.a. Ventilsteuerbefehle. In einer zweiten Zeitphase, der Ventilbewegungs- oder Ausführphase, wird die erzeugte Applikation A auf den Ausführungseinheiten der Ventilanordnung, z.B. auf dem elektronischen Ventilinsel-Controller 1 einer Ventilinsel VI oder auf den elektronischen Ventil-Controllern (Mikrocontroller 124) einer jeweiligen Ventilscheibe VS, ausgeführt.

Die beiden Zeitphasen können in zeitlicher Hinsicht ineinander verwoben sein (interleaved modus). Dies erweist sich insbesondere dann als vorteilhaft, wenn während der Ausführung der Bewegung Regelungswerte erfasst werden, die zur Regelung der Bewegungsaufgabe verwendet werden sollen. Dann kann eine parametrisierte Version der Applikation A erzeugt und auf den Ausführungseinheiten 1, 124, SPS ohne erneutes Laden und Kompilieren der Applikation A zur Ausführung gebracht werden. Die parametrisierte Version basiert auf SOLL-Vorgaben, die aus den erfassten externen und internen Regelgrößen berechnet sind. Bei den SOLL-Vorgaben kann es sich um diskrete oder zeit-kontinuierliche Signale handeln (z.B. ein Kurvenverlauf). Während der Ausführung der Bewegungsaufgabe kann somit vorteilhafterweise sogar ein Ausführungsmodus (z.B. gedämpft, energieeffizient etc.) geändert werden.

Während der Code-Erzeugungsphase ist die Berechnungseinheit 1000 aktiv und zur Erzeugung einer Menge von Applikationen bestimmt. Die Berechnungseinheit 1000 ist über eine Schnittstelle mit einer externen Sensoreinheit 4000 verbunden, über die externe Regelungsgrößen bzw. Prozesssignale des technischen Prozesses (Robotik, Fertigung etc.) eingelesen werden können. Die externe Sensoreinheit 4000 kann in anderen Ausführungen auch kumulativ oder alternativ mit dem speicherprogrammierbaren Steuergerät SPS und/oder mit dem elektronischer Ventil-Controller 1 in Datenaustausch stehen und ihre Sensorsignale an diese Instanzen zur Regelung senden (dies ist in Figur 1 nicht dargestellt). Während der Ventilbewegungs- oder Ausführphase ist die jeweilige Ausführungseinheit 1, 124 auf der Ventilanordnung aktiv. Dies soll in Figur 1 mit der vertikalen gestrichelten Linie repräsentiert werden. Die Steuerung der Ventilfunktion und damit der Bewegungsaufgabe erfolgt durch die Auswahl einer bestimmten Applikation A aus der Menge der bereitgestellten Applikationen.

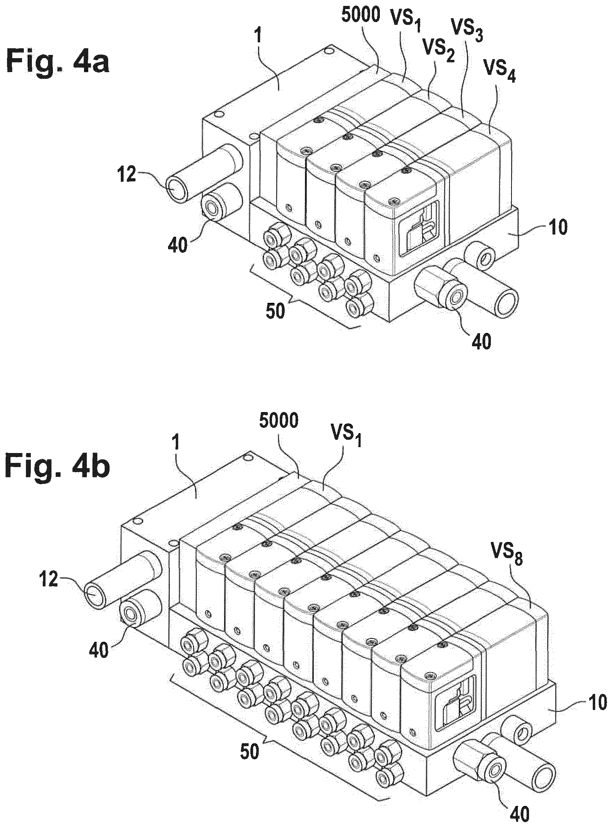

Eine Ventilinsel VI umfasst vier oder acht quaderförmige Ventilscheiben VS und den elektronischen Ventilinsel-Controller 1, der zentral oder als verteilte Lösung zur Steuerung jeweils einer Ventilinsel VI mit den darauf angeordneten Ventilscheiben VS zuständig ist sowie eine interne Messsignaleinheit 5000. Die interne Messsignaleinheit 5000 ist dazu bestimmt, pneumatische Messwerte, wie u.a. Druck, Hub (Weg), Durchfluss, Temperatur, als lokale oder interne Messsignale auf der Ventilinsel VI zu erfassen und an den elektronischen Ventilinsel-Controller 1 und/oder an weitere elektronische Instanzen zur Verarbeitung und Reglung weiterzuleiten. In der Code-Erzeugungsphase kann durch den Anwender bestimmt werden, für welche Parameter Werte erfasst und bei der Berechnung und zur Code-Erzeugung berücksichtigt werden sollen. Auf der Ventilinsel VI können eine Blindplatte für fakultative, weitere Einschubmodule und ein Schnittstellen-Knoten integriert sein, der z.B. als Busknoten und/oder als Ethernet-, Web-Visu-Schnittstelle ausgebildet sein kann. Alle Bauteile der Ventilinsel VI sind auf einer Grundplatte 10 befestigt. Die Grundplatte 10 kann aus einem extrudierten Aluminiumprofil hergestellt sein und weist pneumatische Anschlüsse für Verbindungschläuche, z.B. Arbeitsanschlüsse 50 (in Figur 1 nicht gezeigt, aber in Figuren 4a und 4b detaillierter gezeigt) und Anschlüsse für Zu- und Abluft, insbesondere Entlüftung für Schalldämpfer. Des Weiteren sind elektrische Anschlüsse 14 für Kabel und elektronische Schnittstellen vorgesehen.

In Figur 1 ist auf der rechten Seite schematisch angedeutet, dass der pneumatische Anschluss 12 als Arbeitskanal dient und mit einem Arbeitsgerät, hier einer Kolben-Zylinderanordnung 11, in Verbindung steht, um diese zu bewegen. Wie in Figur 4 gezeigt, sind üblicherweise mehrere Arbeitsanschlüsse 50 vorgesehen, hier: zwei pro Ventilscheibe VS. In der Kolben-Zylinderanordnung 11 sind weitere Sensoren in Form einer Kolben-Zylindersensoreinheit 6000 ausgebildet, umfassend z.B. einzelne oder kombinierte Endlagesensoren, Positionssensoren, Hub-, Drucksensoren etc. Diese internen Sensorsignale werden vorzugsweise direkt an den elektronischen Ventil-Controller 1 zur Regelung weitergeleitet. Sie können direkt auf dem elektronischen Ventil-Controller 1 zusammen mit den lokalen oder internen Messsignalen der internen Messsignaleinheit 5000 und mit externen Prozesssignalen der externen Sensoreinheit 4000 zur Regelung verrechnet werden.

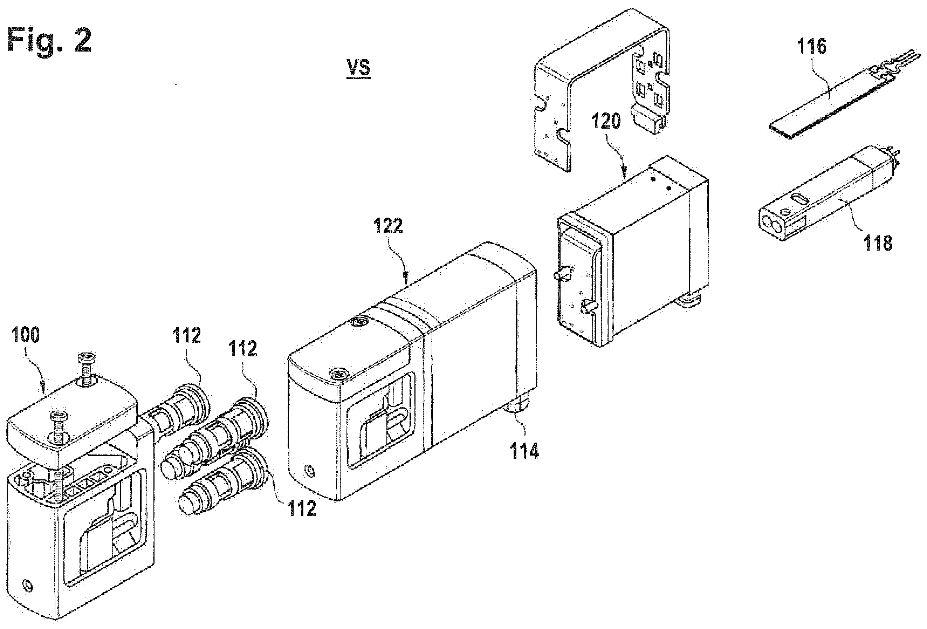

In der bevorzugten Ausführungsform der Erfindung weisen alle Ventilscheiben VS einer Ventilinsel VI den identischen Aufbau auf, der später in Zusammenhang mit Figur 2 beschrieben wird.

Der elektronische Ventil-Controller 1 dient zur Steuerung und Regelung der Ventile, die in der Ventilanordnung VS, VI vorgesehen sind. In der bevorzugen Ausführungsform der Erfindung wird die Ventilanordnung durch die Ventilinsel VI gebildet und die Ausführungseinheit zur Ausführung der Applikation A ist der elektronische Ventilinsel-Controller 1, der zentral und gleichzeitig mehrere (vier oder acht) Ventilscheiben VS der Ventilinsel VI ansteuern und regeln kann.

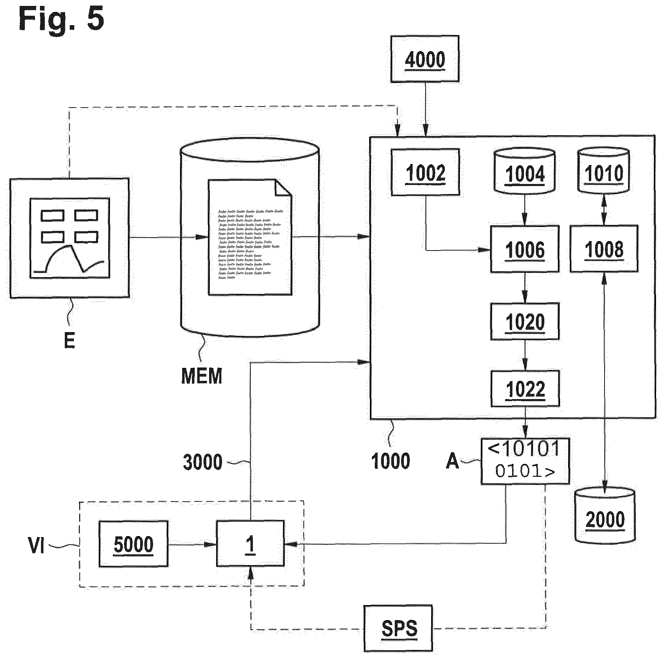

Das Grundprinzip der Erfindung wird im Folgenden unter Bezugnahme auf **Figur 5** erläutert. Die Berechnungseinheit 1000 umfasst den Editor E oder steht mit diesem in Datenverbindung (dieser Fall ist in Figur 1 dargestellt). Der Editor E dient zur Eingabe einer Bewegungsaufgabe beliebiger Art, wie z.B. "Bewege einen Körper X von Position A nach Position B und führe dies möglichst schnell aus", "Führe eine Drosselfahrt aus", "Führe Bewegung X aus und beende sie mit einem Soft Stopp" etc. Die Bewegungsaufgabe kann mehrere Aufgabesequenzen bzw. Teilbewegungen umfassen, die in definierbaren Zeitintervallen auszuführen sind. Auch kann die Bewegungsaufgabe in unterschiedlichen Ausführungsmodi (gedrosselt, energieeffizient, erschütterungsfrei etc.) ausgeführt werden. Grundsätzlich definiert die Bewegungsaufgabe den physikalischen Vorgang, eine Masse innerhalb eines dreidimensionalen Raums oder entlang einer Bahn mit einer bestimmbaren Geschwindigkeit und mit einer bestimmbaren Beschleunigung und gegebenenfalls mit einem bestimmbaren Energieverbrauch zu bewegen. Vorzugsweise wird die Bewegungsaufgabe in ein bereitgestelltes Modell einer Software-Entwicklungsplattform durch einen Anwender eingegeben. Es liegt jedoch ebenso im Rahmen der Erfindung, die auszuführende Bewegungsaufgabe aus einer Datei, insbesondere einer Parametrisierungsdatei einzulesen (z.B. für Plattformen wie Matlab/Simulink, Codesys, oder ähnliche). Ebenso kann die Bewegungsaufgabe in einem Speicher abgelegt werden. Die Bewegungsaufgabe kann in unterschiedlichen Formaten bereitgestellt werden (als Text-Datei, als Bilddatei oder Videoaufzeichnung, in einem maschinenlesbaren Format etc.). In dem zugrundeliegenden Modell werden die jeweiligen pneumatischen Anforderungen definiert. Die Software-Entwicklungsplattform ist vorzugsweise dazu ausgelegt, dass das Modell simuliert und getestet und automatisch Code (z.B. C++ Code) erzeugen kann. Bei dem erzeugten Code handelt es sich um ausführbaren Programmcode. Das Modell wird in einer bevorzugten Ausführungsform der Erfindung in einer Matlab-Simulink-Umgebung erzeugt. Simulink® ist eine Blockdiagrammumgebung für die modell-basierte technische Entwicklung und unterstützt den Entwurf und die Simulation auf Systemebene und ermöglicht außerdem die automatische Codegenerierung und das kontinuierliche Testen und Verifizieren von Embedded Systems. Es können jedoch auch andere Modelle und Plattformen zur Anwendung kommen.

Wie bereits erwähnt, gliedert sich das erfindungsgemäße Verfahren grundsätzlich in zwei Zeitphasen:
1. Eine Code-Erzeugungsphase, in der aus der erfassten Bewegungsaufgabe automatisch ein ausführbarer Code in Form einer Applikation A erzeugt wird. Durch Berücksichtigung von Regelgrößen kann die Applikation A fortlaufend modifiziert und verfeinert werden. So kann das Modul zur Code-Erzeugung als selbstlernendes System ausgebildet werden.
2. Eine Ventilbewegungs- oder Ausführphase: In dieser Phase wird die Bewegungsaufgabe tatsächlich durchgeführt, indem die Ventile der Ventilanordnung VS, VI entsprechend den Vorgaben der bereitgestellten Applikation A angesteuert werden. Dazu wir die Applikation A auf einer oder mehreren Ausführungseinheiten 1, 124 der Ventilanordnung VS, VI ausgeführt. Vorzugsweise werden auf jeder Ventilinsel VI in einer oder mehreren internen Sensoreinheiten pneumatische und für den jeweiligen Anwendungsfall relevante Messwerte erfasst, die als Regelgrößen zur Applikationserzeugung oder Applikationsmodifikation zurückgeführt werden, um die Applikation zu verbessern, verfeinern bzw. zu modifizieren und in einer modifizierten (insbesondere parametrisierten) Version auf die Ausführungseinheiten zu laden. Kumulativ können auch externe Regelgrößen zur Applikationsparametrisierung verwendet werden.

Zur automatischen Erzeugung des ausführbaren Programmcodes auf Basis der erfassten pneumatischen Bewegungsaufgabe wird die Berechnungseinheit 1000 bereitgestellt. Wie in Figur 5 ersichtlich, umfasst die Berechnungseinheit 1000 mehrere Module, die alle über ein Netzwerk in Datenaustausch stehen, nämlich einen Interpreter 1002, der dazu bestimmt ist, die erfasste Bewegungsaufgabe in eine Folge von Tasks zu zerlegen. Bei den Tasks kann es sich um Bewegungssequenzen handeln, die hintereinander ausgeführt werden sollen. Die Berechnungseinheit 1000 umfasst weiterhin einen Kompositeur 1006, der dazu ausgebildet ist, auf einen Speicher 1004 mit gespeicherten Applikationsobjekten zuzugreifen, um für jeweils einen Task aus der Menge von Tasks notwendige Applikationsobjekte auszuwählen, um daraus einen ausführbaren Programmcode zu erzeugen. In der Berechnungseinheit 1000 ist weiterhin ein Distributor 1020 vorgesehen, der dazu ausgebildet ist, den erzeugten ausführbaren Programmcode auf zumindest eine Ausführungseinheit, nämlich auf den elektronischen Ventil-Controller 1 und/oder die Mikrocontroller 124 einer Ventilscheibe VS und/oder auf das speicherprogrammierbare Steuergerät SPS zu verteilen und dort zu laden. Die Berechnungseinheit 1000 umfasst weiterhin einen Executor 1022, der dazu ausgebildet ist, den erzeugten ausführbaren Programmcode auszuführen. In der Hauptausführungsform der Erfindung ist der Executor 1022 als Ausführungseinheit 1, 124 auf der Ventilinsel VI ausgebildet. Alternativ oder kumulativ kann der Executor 1022 als übergeordnete Instanz bereitgestellt werden, wie z.B. als speicherprogrammierbares Steuergerät SPS, das noch weitere, koordinierende Aufgaben, etwa in Zusammenhang mit Arbeitsgeräten der technischen Prozessanlage übernimmt. Die Ausführungseinheiten 1, 124, SPS sind neben der Applikationsprogrammausführung auch dazu ausgebildet, interne Messsignale der Ventilanordnung, insbesondere der Ventilinsel VI, als Regelgrößen zu erfassen und an die Berechnungseinheit 1000 zur Erzeugung eines modifizierten ausführbaren Programmcodes zurückzuführen. Dazu steht die Regelungsschnittstelle 3000 zur Verfügung.

Die erzeugte Applikation A kann direkt auf den elektronischen Ventil-Controller 1 und/oder auf die anderen verteilten Ausführungseinheiten zur Ausführung geladen werden. In diesem Fall ist die Verwendung einer speicherprogrammierbaren Steuerung SPS zur Ansteuerung der Ventilanordnung VS, VI nicht mehr zwingend notwendig. Ebenso ist es möglich, dass die Applikation A oder Teile davon auf das Steuergerät SPS geladen wird, das dann den Code an den elektronischer Ventil-Controller 1 zur Steuerung weiterleitet. Üblicherweise wird nach dem Laden der Applikation A auf den elektronischen Ventil-Controller 1, eine Einbindung des Programmcodes auf der speicherprogrammierbaren Steuerung SPS erfolgen, damit diese den Programmablauf triggern kann. Über die speicherprogrammierbare Steuerung SPS kann somit zumindest ein Anfangsbefehl und ein Endbefehl für die Bewegungsaufgabe an den elektronischen Ventil-Controller 1 gegeben werden.

In einer bevorzugten Ausführung der Erfindung umfasst die Berechnungseinheit 1000 weiterhin einen Matcher 1008, der dazu ausgebildet ist, auf einen Lizenz-Speicher 1010 und/oder auf eine externen Speicher 2000 zuzugreifen, in dem jeweils eine Bibliothek von lizenzbedürftigen Applikationsobjekten hinterlegt ist. Der externe Speicher 2000 kann als Cloud-basierte Bibliothek mit Applikationsobjekten ausgebildet sein. In dem Lizenz-Speicher 1010 sind Lizenzdaten in Bezug auf die Applikationsobjekte hinterlegt. Der Matcher 1008 ist dazu ausgelegt, die Erzeugung des ausführbaren Programmcodes hinsichtlich unterschiedlicher Aspekte zu optimieren. Dies wird erreicht, indem analysiert wird, ob lizenzbedürftige Applikationsobjekte in dem Lizenz-Speicher 1010 und/oder dem externen Speicher 2000 existieren, die für die Ausführung der erfassten Bewegungsaufgabe unter Berücksichtigung von internen und externen Regelgrößen geeignet (und möglicherweise besser geeignet) sind als die bisherigen Applikationsobjekte, die bisher aus dem Speicher 1004 verwendet worden sind. Falls dies der Fall ist, und für die Bewegungsaufgabe unter den erfassten Messbedingungen (über die erfassten Regelgrößen) "bessere" Applikationsobjekte vorhanden sind, können dem Anwender auf einer Benutzeroberfläche die Art der verfügbaren Applikationsobjekte und deren Lizenzbedingungen angezeigt werden. Falls der Anwender unter Zahlung einer entsprechenden Lizenzgebühr den Lizenzbedingungen zustimmt, kann das jeweilige lizenzbedürftigen Applikationsobjekt aus dem externen Speicher 2000 und/oder aus dem Speicher 1004 (falls dieser ebenfalls lizenzbedürftige Applikationsobjekte umfasst) geladen und zur Erzeugung der Applikation A verwendet werden. Parallel wird eine Aktualisierung des Lizenz-Datensatzes in dem Lizenz-Speicher 1010 ausgeführt. Das erworbene oder lizensierte Applikationsobjekt kann dem Kompositeur 1006 weitergeleitet werden. Es sei darauf hingewiesen, dass die Benutzerschnittstelle zum Eingeben der Bewegungsaufgabe und zur Darstellung der geeigneten lizenzbedürftigen Applikationsobjekte aus dem Speicher 1010 nicht übereinstimmen müssen.

In einer bevorzugten Ausführung der Erfindung werden sich der Editor E und die Berechnungseinheit 1000 auf demselben System befinden, während der elektronische Ventil-Controller 1 und die Ventilanordnung VS, VI in einem Bauteil integriert sind, das sich jedoch an einem entfernten Ort befindet (verteiltes System) und über entsprechende Datenschnittstellen verbunden ist. In alternativen Ausführungsform der Erfindung können hier auch zusätzliche bauliche und/oder computer-basierte Einheiten vorgesehen sein, so dass sich z.B. der Editor E nicht auf dem System der Berechnungseinheit 1000 befindet.

Das pneumatische Bewegungssteuerungssystem umfasst vorteilhafterweise ein Optimierungsmodul, das zur Optimierung und/oder Regelung der pneumatischen Bewegungsaufgabe ausgelegt ist, indem bei der Generierung des ausführbaren Programmcodes vordefinierbare Optimierungskriterien berücksichtigt werden, wie z.B. Optimierung hinsichtlich der benötigen Zeit, Energie, Druckluft etc.

Wie in Figur 5 abgebildet werden bei der Erzeugung des ausführbaren Programmcodes Regelgrößen berücksichtigt. In einer bevorzugten Ausführung der Erfindung handelt es sich sowohl um interne als auch um externe Regelgrößen. "Intern" meint in diesem Kontext, physikalische Messsignale, die auf der internen Messsignaleinheit 5000 erfasst werden, die auf dem elektronischen Ventil-Controller 1 angeordnet ist, so dass es sich um ventilinselinterne und lokale Messsignale handelt. "Extern" soll kennzeichnen, dass beliebige pneumatisch relevante externe Regelgrößen (also ventil-insel externe und z.B. zentrale oder globale Größen) eingelesen und zur Erzeugung der Applikation A berücksichtigt werden können. Die externen Regelgrößen werden aus einer externen Sensoreinheit 4000 eingelesen. Die internen Regelgrößen werden über die Regelungsschnittstelle 3000 von der Ventilinsel bzw. dem elektronischen Ventil-Controller 1 an die Berechnungseinheit 1000 zurückgeführt.

**Figur 2** zeigt die wesentlichen Bauteile einer Ventilscheibe VS mit einer Einheit von vier Ventilen. Sie umfasst ein Gehäuse 100, in dem die in diesem Beispiel vier Boosterpatronen 112 gelagert sind. Die Boosterpatronen 112 dienen zur lokalen bzw. punktuellen Durchflusserhöhung. In einem Mittelteil der Ventilscheibe VS ist eine Elektronikplatine 120 angeordnet, in der ein serieller synchroner Datenbus (Serial Peripheral Interface, SPI) 114 angeordnet ist, mit dem digitalen Daten nach einem Master-Slave Prinzip ausgetauscht werden können. Die Ventilscheibe VS umfasst neben der Elektronikplatine 120 eine Ventileinheit mit Ventilen 118 und einen Piezoaktuator 116. Der Piezoaktuator 116 umfasst üblicherweise mehrere Schichten von dünnen piezoelektrischen Schichten, die sich beim Anlegen einer Spannung ausdehnen bzw. bewegen und dient somit als elektropneumatische Schnittstelle. Die Bauteile werden über ein Befestigungselement 122 zu einem Gesamtmodul verbaut.

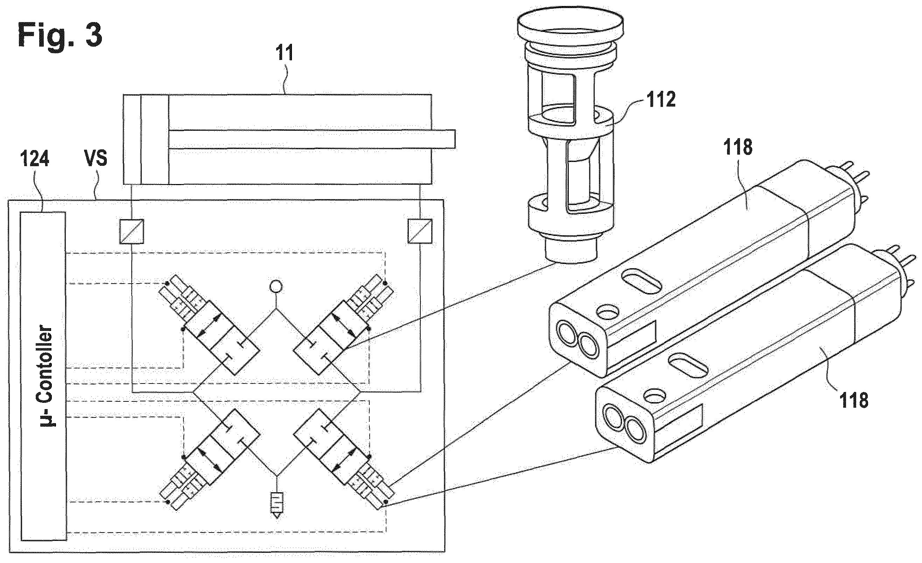

**Figur 3** zeigt den Aufbau einer Ventilscheibe VS gemäß einer bevorzugten Ausführung der Erfindung. Diese umfasst vier Ventile 118 in einer Ventileinheit, die zwei Zylinderkammern eines Zylinders unabhängig voneinander über eine Brückenschaltung (z.B. nach Art einer elektrischen Wheatstone-Brücke) steuern, um höherwertige Ventilfunktionen bereitstellen zu können. Ein Booster 112 dient jeweils zur Durchflusserhöhung. Jede Ventilschreibe VS umfasst eine Steuerungseinheit, die z.B. als Mikrocontroller 124 ausgebildet sein kann, um eine entsprechend der Bewegungsaufgabe von der Applikation A definierte Ansteuerspannung zur Ausführung eines Ventilhubs oder zur Einstellung von Druckverhältnissen zur Verfügung zu stellen. In einer Ausführungsform der Erfindung dient der Mikrocontroller 124 zur Steuerung der Einzelventile und steht in Datenverbindung, insbesondere in Datenaustausch (bidirektional) mit dem elektronischen Ventil-Controller 1 (in Figur nicht dargestellt). In einer anderen Ausführungsform der Erfindung existieren auf jeder Ventilscheibe VS Mikrocontroller, die allerdings als Ausführungseinheit zur Ausführung der Applikation A dienen; diese stehen mit den jeweils anderen Mikrocontrollern anderer Ventilscheiben VS derselben Ventilinsel VI in Datenverbindung.

Erfindungsgemäß können die Ventilfunktion der Ventilscheibe VS (z.B. als 4/2-, 4/3, 2x 3/2, 2x 3/3-Wegeventil etc.) und weitere Funktionen, Ausführungsmodi und Betriebsbedingungen des Ventils (z.B. Soft Stopp, Ecomode, Druckkontrolle, Durchflusskontrolle etc.) adaptiv durch die Applikation A verändert werden. Die Auswahl der Ventilfunktionen und Betriebsbedingungen ist selbst dann möglich, wenn ein und dieselbe Ventilmechanik bzw. Ventilkonstruktion zum Einsatz kommen soll. Also kann erfindungsgemäß bei einem bestimmten pneumatischen System (mit bestimmten physikalischen Bauteilen) die Ventilfunktion variabel an den Anwendungsfall mit der jeweiligen Bewegungsaufgabe angepasst werden.

In **Figur 4** ist eine Ventilinsel VI in unterschiedlichen Ausführungsvarianten dargestellt: In **Fig. 4a** ist eine aus vier Ventilscheiben VS bestehende Ventilinsel VI und in **Fig. 4b** eine aus acht Ventilscheiben VS bestehende Ventilinsel VI dargestellt. Mit dem Bezugszeichen 40 ist exemplarisch ein Versorgungsanschluss oder Druckanschluss bezeichnet. Die Ventilinsel VI umfasst eine interne Messsignaleinheit 5000 zur Erfassung von lokalen Messsignalen. Bei den Messsignalen kann es sich um alle pneumatisch relevanten, physikalischen Messgrößen handeln, wie Temperatur, Druck, Position des Ventilschiebers (Hub), Durchfluss, Durchflussgeschwindigkeit etc. Es kann sich um zeit-kontinuierliche oder diskrete Signale handeln. Die jeweiligen physikalischen Größen können über mehrere Sensoren ermittelt und dann als gemitteltes Signal bereitgestellt werden. Die zu erfassenden Regelgrößen der internen Messsignaleinheit 5000 werden in der Code-Erzeugungsphase definiert. Mit dem Bezugszeichen 12 ist eine Entlüftung gekennzeichnet. Mehrere Arbeitskanäle oder Arbeitsanschlüsse 50 steuern und bewegen ein Arbeitsgerät, hier eine nicht dargestellte Kolben/Zylinder-Anordnung 11.

In einem Ausführungsbeispiel kann der elektronische Ventil-Controller 1 zur technischen Diagnose eingesetzt werden. Dazu werden über die Sensoreinheiten 4000, 5000 entsprechende Messwerte erfasst und an eine Diagnosemodul weitergeleitet. Das Diagnosemodul kann z.B. auf der Berechnungseinheit 1000 ausgebildet sein. So kann z.B. eine Leckage in der Applikation überwacht werden. Dazu können die Sensoren in dem Ventil, in der Verschlauchung, in den Verschraubungen und im Zylinder angeordnet sein. Bei (erster) Inbetriebnahme wird ein IST-Zustand erfasst, der als SOLL-Zustand und als (Gut-) Referenz dient. Zur Laufzeit der Applikation A kann durch Triggern der Diagnoseaufgabe das Leckageniveau an den jeweiligen Positionen der Ventilanordnung als IST-Zustand ermittelt werden, wenn sich der Zylinder in einer Position befindet, die eine Sensordatenerfassung ermöglicht. Nach Abgleich zwischen SOLL- und IST-Zustand kann die jeweilige technische Diagnoseinformation z.B. als Statusbit (z.B. "Leckage erhöht") an die Berechnungseinheit 1000 und/oder an den elektronischen Ventil-Controller 1 übertragen werden. Die jeweiligen Parameter des SOLL-Zustandes können jeweils in einer Einlernfahrt des pneumatischen Systems ermittelt werden.

In einem weiteren Ausführungsbeispiel kann ein Applikationsmonitoring ausgeführt werden, indem z.B. ein Verschleißzustand eines pneumatischen Antriebs und/oder einer Führung ermittelt werden soll. In der internen Messsignaleinheit 5000 werden der Losbrechdruck des pneumatischen Antriebs und die Laufzeit zwischen den Endlagen unter Berücksichtigung des Druckniveaus, der Temperatur und/oder weiteren Parametern (bisherige Bewegung etc.) erfasst. Dieser Zustand wird bei Inbetriebnahme wieder als SOLL-Zustand und als Referenz gespeichert. Zur Laufzeit kann nach dem Auslösen der Monitoringaufgabe der tribologische Zustand des pneumatischen Antriebs (umfassend Zustandsdaten hinsichtlich der Reibung und des Verschleißes der Bauteile) ermittelt werden, wenn der Zylinder in seiner Endposition steht. Je nach Erfassung des IST-Zustandes und Vergleich mit dem SOLL-Zustand wird das Ergebnis als Statusbit (z.B. "Reibung erhöht") an eine Überwachungsinstanz, z.B. die Berechnungseinheit 1000 übertragen.

In einem weiteren Beispiel kann ein Ventilzustand durch die Erfassung von Ventilparametern an unterschiedlichen Positionen in der Ventilscheibe VS erfasst werden, z.B.:
- Am Piezo-Bieger
- Am inneren Teil der Pilotpatrone
- An den unteren Seiten der u-förmigen Elektronikplatine 120
- An den inneren Stirnflächen der Boosterpatronen etc.

Der SOLL-Zustand wird vom Hersteller der Ventilanordnung erfasst und als Referenz gespeichert werden. Zur Laufzeit der Applikation A kann durch entsprechendes Triggern der Monitoringaufgabe an dem elektronischen Ventil-Controller 1 oder an der Berechnungseinheit 1000 der Systemzustand des Ventils bzw. der Ventilscheibe VS ermittelt werden und in einem Statusbit (z.B. "Ventil überprüfen") übertragen werden.

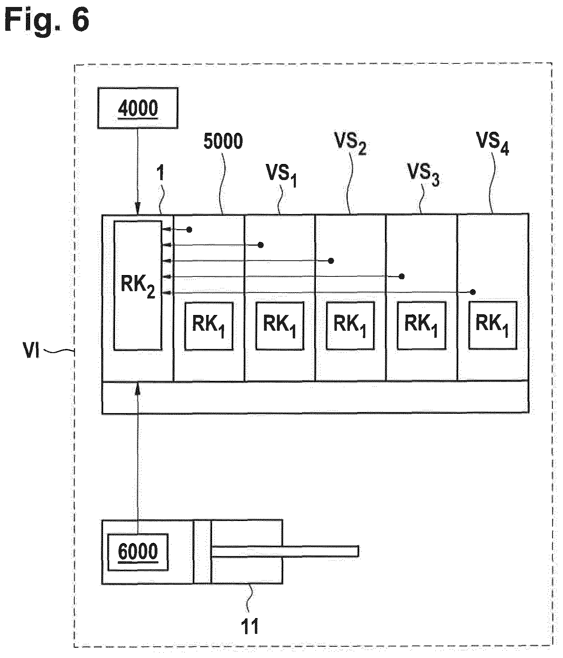

**Figur 6** zeigt unterschiedliche Regelkreise, die zur Regelung der Ventilanordnung verwendet werden. Die Ventilinsel VI hat den oben näher beschriebenen Aufbau und umfasst vier Ventilscheiben VS und eine interne Messsignaleinheit 5000. Auf jeder Ventilscheibe VS ist ein erster Regelkreis RK₁ integriert, der interne Sensorsignale (erfasst lokal auf der Ventilscheibe VS) verrechnet, um diese zu regeln. Vorzugsweise werden für den ersten Regelkreis RK₁ die internen Sensorsignale der Kolben-Zylindersensoreinheit 6000 zur Regelung verrechnet. Fakultativ können zusätzlich noch die lokalen Messsignale der internen Messsignaleinheit 5000 verrechnet werden. Ein zweiter Regelkreis RK₂ ist in dem elektronischer Ventil-Controller 1 integriert. Er dient zur Verrechnung der Sensorsignale, die von der internen Messsignaleinheit 5000 und von der Kolben-Zylindersensoreinheit 6000 eingelesen werden. Gemäß einer Ausführungsform der Erfindung ist die externe Sensoreinheit 4000 mit der Ventilinsel VI, insbesondere mit dem elektronischen Ventil-Controller 1 datentechnisch verbunden, so dass die externe Sensoreinheit 4000, die auf ihr erfassten Prozesssignale direkt an den elektronischen Ventil-Controller 1 zur Regelung senden kann. In diesem Fall werden lokal auf dem elektronischen Ventil-Controller 1 zusätzlich zu den Sensorsignalen der internen Messsignaleinheit 5000 und der Kolben-Zylindersensoreinheit 6000 noch die externen Prozesssignale zur Regelung verrechnet.

Gemäß einer bevorzugten Ausführung der Erfindung und üblicherweise erfolgen das Erfassen der Bewegungsaufgabe auf dem Editor E und das Erzeugen der Applikation A mit dem ausführbaren Programmcode auf der Berechnungseinheit 1000. Die Applikation A kann dann auf eine oder auf mehrere Ausführungseinheiten zur Ausführung verteilt werden. Bei den Ausführungseinheiten handelt es sich um digitale Instanzen oder elektronische Bauteile, die auf einem pneumatischen Ventil oder einer Ventilanordnung bereitgestellt werden. Bei der Ventilanordnung kann es sich um den elektronischen Ventil-Controller 1 einer Ventilinsel VI und somit um eine Gruppe von Ventilscheiben VS oder um den Mikrocontroller 124 oder eine andere Steuereinheit einer Ventilscheibe VS handeln. Alle Module des pneumatischen Systems stehen in Datenaustausch, so dass auch eine verteilte Lösung umgesetzt werden kann.

Mit der Erfindung sind mehrere Vorteile verbunden. So können bei ein und derselben Konstruktion (mechanischer Aufbau) der Ventilscheibe VS und/oder der Ventilinsel VI unterschiedliche Ventilfunktionen angesteuert werden (z.B. als 4/2- oder 4/3-Wegeventil, mit oder ohne Ecomodus, mit oder ohne Soft Stopp oder Durchflusskontrolle etc.). Zum anderen können die unterschiedlichen Ventilfunktionen und damit die unterschiedlichen Bewegungsaufgaben auf nur einer Maske einer Benutzeroberfläche zentral gesteuert werden. Die Benutzeroberfläche wird vorzugsweise auf der Berechnungseinheit 1000 bereitgestellt oder alternativ auf dem Steuergerät SPS. Dies macht die Bedienung und Steuerung übersichtlich und einfach. Darüber hinaus kann eine Regelung bei der Ausführung der Bewegungsaufgabe sowohl auf Basis von internen Regelgrößen der Ventilinsel VI oder der Ventilscheibe VS als auch auf Basis von externen Regelgrößen (z.B. Prozesssignalen außerhalb der Ventilinsel VI) ausgeführt werden. Die Regelung kann unmittelbar zu einer neuen Version (neue Parametrisierung) der Applikation A führen, die in Echtzeit auf die Ausführungseinheiten geladen wird. Auch kann ein sehr schneller Wechsel der Bewegungsaufgabe ohne erneute Parametrierung durchgeführt werden. Zur Steuerung der Bewegungsaufgabe ist aufgrund der Auswahl von unterschiedlichen Applikationen A keine vertiefte Kenntnis in der Fluidtechnik mehr erforderlich.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem jeweiligen erfindungsgemäßen Gegenstand vorgesehen sein, um gleichzeitig deren vorteilhafte Wirkungen zu realisieren. Für einen Fachmann ist es insbesondere offensichtlich, dass die Erfindung nicht nur für Ventilinseln in der beschriebenen Form angewendet werden kann, sondern auch für andere Baugruppen mit Ventilanordnungen oder Ventilschaltungen, die jeweils pneumatische Ventile umfassen. Des Weiteren können die Bauteile des pneumatischen Bewegungssteuerungssystems auf mehrere physikalische Produkte verteilt realisiert werden kann. So kann insbesondere der Editor E, die Berechnungseinheit 1000 und die zumindest eine Ausführungseinheit 1, 124, SPS der Ventilanordnung VS, VI auf unterschiedlichen baulichen Einheiten bereitgestellt werden.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- VS: Ventilscheibe
- VS₁,VS₂: erste Ventilscheibe, zweite Ventilscheibe, etc...
- VI: Ventilinsel
- 1: Elektronischer Ventil-Controller
- SPS: speicherprogrammierbares Steuergerät
- 10: Grundplatte der Ventilinsel
- 11: Kolben-Zylinderanordnung
- 12: Entlüftung
- 14: elektrische Anschlüsse
- 40: Versorgungsanschluss
- 50: Arbeitsanschluss
- 100: Gehäuse für Boosterpatronen
- 112: Boosterpatrone
- 114: serieller synchroner Datenbus
- 116: Piezoaktuator
- 118: Ventil
- 120: Elektronikplatine
- 122: Befestigungselement
- 124: Mikrocontroller
- E: Editor
- MEM: Speicher
- 1000: Berechnungseinheit
- 1002: Interpreter
- 1004: Speicher mit Applikationsobjekten
- 1006: Kompositeur
- 1008: Matcher
- 1010: Datenbank mit Lizenzdaten
- 1020: Distributor
- 1022: Ausführungseinheit
- 2000: Bibliothek aus Applikationsobjekten
- A: Applikation
- 3000: Regelungsschnittstelle
- 4000: Externe Sensoreinheit
- 5000: Interne Messsignaleinheit
- 6000: Kolben-Zylinder-Sensoreinheit
- RK₁: ersten Regelkreis
- RK₂: zweiter Regelkreis

## Patentansprüche

1. Pneumatische Ventilanordnung umfassend einen elektronischen Ventil-Controller (1) zur Steuerung und Regelung der pneumatischen Ventilanordnung (VS, VI) für eine pneumatische Bewegungsaufgabe, **dadurch gekennzeichnet, dass**
auf dem elektronischen Ventil-Controller (1) eine Applikation (A) zur Steuerung und Regelung der Ventilanordnung (VS, VI) ausführbar geladen oder ladbar ist, um die pneumatische Bewegungsaufgabe auszuführen,
wobei die Ventilanordnung eine Ventilinsel (VI) ist, wobei die Ventilinsel (VI) mehrere Ventilscheiben (VS) umfasst und wobei jeweils eine der Ventilscheiben (VS) mit mehreren, und vorzugsweise vier oder acht, verschalteten pneumatischen Ventilen (118) ausgebildet ist und
wobei die Ventilanordnung einen ersten und einen zweiten Regelkreis (RK1, RK2) umfasst
- wobei der erste Regelkreis (RK1) in jeweils einer Ventilscheibe (VS) der Ventilinsel (VI) implementiert ist und dazu bestimmt ist, Sensorsignale der Ventilscheibe (VS) zu verrechnen; und
- wobei der zweite Regelkreis (RK2) in dem elektronischen Ventil-Controller (1) integriert ist, und dazu bestimmt ist, Sensorsignale einer Kolben-Zylindersensoreinheit (6000) und/oder lokale Messsignale einer ventilanordnungsinternen Messsignaleinheit (5000) und/oder ventilanordnungsexterne Prozesssignale einer externen Sensoreinheit (4000) zur Regelung zu verrechnen.

2. Pneumatische Ventilanordnung nach Patentanspruch 1, **dadurch gekennzeichnet, dass** der elektronische Ventil-Controller (1) über eine Schnittstelle mit einer Berechnungseinheit (1000) zum Datenaustausch verbindbar ist, wobei die Berechnungseinheit (1000) zur Erzeugung der Applikation (A) geeignet ist.

3. Pneumatische Ventilanordnung nach zumindest einem der vorhergehenden Patentansprüche, **dadurch gekennzeichnet, dass** der elektronische Ventil-Controller (1) und die interne Messsignaleinheit (5000) auf der Ventilinsel (VI) angeordnet sind, wobei der elektronische Ventil-Controller (1) dazu bestimmt ist, lokale Messsignale der Ventilanordnung (VS, VI) über die interne Messsignaleinheit (5000) zu empfangen und zur Regelung zu verrechnen.

4. Pneumatische Ventilanordnung nach zumindest einem der vorhergehenden Patentansprüche, **dadurch gekennzeichnet, dass** die Kolben-Zylinderanordnung (11) zur Detektion von internen Sensorsignalen eine Kolben-Zylindersensoreinheit (6000) umfasst, wobei der elektronische Ventil-Controller (1) dazu bestimmt ist, zur Steuerung und Regelung die Ventilanordnung (VS, VI) zur Bewegung der Kolben-Zylinderanordnung (11) die detektierten internen Sensorsignale zur Regelung zu verrechnen.

5. Pneumatische Ventilanordnung nach zumindest einem der vorhergehenden Patentansprüche, **dadurch gekennzeichnet, dass** der elektronische Ventil-Controller (1) dazu dient, die Applikation (A) auf Basis von auf der internen Messsignaleinheit (5000) erfassten lokalen Messsignalen der Ventilanordnung (VS, VI) und/oder auf Basis von internen Sensorsignalen der Kolben- Zylindersensoreinheit (6000) und/oder auf Basis von externen Prozesssignalen der externen Sensoreinheit (4000) zu modifizieren und zu parametrisieren.

6. Pneumatische Ventilanordnung nach zumindest einem der vorhergehenden Patentansprüche, **dadurch gekennzeichnet, dass** der elektronische Ventil-Controller (1) über ein Bussystem mit einem digitalen programmierbaren Steuergerät (SPS) in Datenaustausch steht und, dass die auf den elektronischen Ventil-Controller (1) geladene Applikation (A) in ein Ablaufprogramm auf dem digitalen programmierbaren Steuergerät (SPS) eingebunden wird, so dass die Ausführung der Applikation (A) auf der Ventilanordnung (VS, VI) über das digitale programmierbare Steuergerät (SPS) getriggert werden kann,
und dass auf dem digitalen programmierbaren Steuergerät (SPS) weitere Steuerapplikationen bereitgestellt werden, die zur Ausführung der pneumatischen Bewegungsaufgabe auf den elektronischen Ventil-Controller geladen werden können,
zur Ausführung von übergeordneten Funktionen und zur Koordination mit anderen Einheiten eines technischen Anwendungssystems.

7. Verfahren zur Steuerung und Regelung einer pneumatischen Ventilanordnung (VS, VI) zur Ausführung einer pneumatischen Bewegungsaufgabe, wobei die Ventilanordnung eine Ventilinsel ist,
umfassend folgende Verfahrensschritte:
- Einlesen der pneumatischen Bewegungsaufgabe;
- Automatisches Erzeugen eines ausführbaren Programmcodes zur Steuerung und Regelung der pneumatischen Ventilanordnung (VS, VI) auf Basis der erfassten pneumatischen Bewegungsaufgabe unter Zugriff auf eine Bibliothek aus Applikationsobjekten (2000, 1004) und
- Laden des ausführbaren Programmcodes als Applikation (A) in Echtzeit auf Ausführungseinheiten (1 , 124, SPS) der Ventilanordnung (VS, VI),
wobei während der Ausführung der Bewegungsaufgabe mittels der Ventilanordnung (VS, VI) zumindest zwei Regelkreise (RKi, RK 2) zur Regelung der Ventilanordnung (VS, VI) verwendet werden:
- Ein erster Regelkreis (RKi), der in jeweils einer Ventilscheibe (VS) einer Ventilinsel (Vi) implementiert ist und Sensorsignale der Ventilscheibe (VS) verrechnet;
- Ein zweiter Regelkreis (RK 2), der in einem elektronischen Ventil-Controller (1) integriert ist, und Sensorsignale einer Kolben-Zylindersensoreinheit (6000) und/oder lokale Messsignale einer internen Messsignaleinheit (5000) und/oder externe Prozesssignale einer externen Sensoreinheit (4000) verrechnet.

8. Verfahren nach dem vorhergehenden Verfahrensanspruch, wobei die Regelung das automatische Berechnen von SOLL-Vorgaben aus erfassten Sensorsignalen, Messsignalen und/oder externen Prozesssignalen umfasst.

9. Verfahren nach einem der vorhergehenden Verfahrensansprüche, wobei die Regelung der Ventilanordnung (VS, VI) in Echtzeit erfolgt.

10. Verfahren nach einem der vorhergehenden Verfahrensansprüche, wobei die Applikation (A) parametrisiert ist und SOLL-Vorgaben zur Parametrisierung der Applikation (A) verrechnet werden.

11. Verfahren nach einem der vorhergehenden Verfahrensansprüche, bei dem zur Steuerung oder Regelung folgende Betriebsbedingungen spezifizierbar sind, aus denen SOLL-Vorgaben berechnet werden:
- Dämpfung einer Kolbenbewegung durch Bereitstellen einer Dämpfungsfunktion, insbesondere eines Soft Stopps, Geschwindigkeitsregelung eines Kolbens durch Bereitstellen einer
- Drosselfunktion zur Regelung der Kolbengeschwindigkeit,
- Bereitstellen einer Druckkontrolle und/oder einer Druckverlaufskontrolle,
- Regelung einer Ausführungszeit der Bewegungsaufgabe,
- Reglung einer Energieeffizienz der Bewegungsaufgabe,
- Ausführen einer Bewegung mit Zwischenstopps und/oder separaten Bewegungsabschnitten
- Regelung hinsichtlich anwendungsspezifischer zu bestimmender Parameter, Ausführen der Bewegungsaufgabe zum Zweck der Diagnose.

## Claims

1. Pneumatic valve arrangement comprising an electronic valve controller (1) for controlling and regulating the pneumatic valve arrangement (VS, VI) for a pneumatic movement task, **characterized in that**
an application (A) for controlling and regulating the valve arrangement (VS, VI) is executably loaded or loadable on the electronic valve controller (1) in order to execute the pneumatic movement task,
wherein the valve arrangement is a valve terminal (VI), wherein the valve terminal (VI) comprises a plurality of valve discs (VS) and wherein in each case one of the valve discs (VS) is formed with a plurality of, and preferably four or eight, interconnected pneumatic valves (118) and
wherein the valve arrangement comprises a first and a second control circuit (RK1, RK2)
- wherein the first control loop (RK1) is implemented in a respective valve disc (VS) of the valve terminal (VI) and is intended to process sensor signals of the valve disc (VS); and
- wherein the second control circuit (RK2) is integrated in the electronic valve controller (1) and is intended to process sensor signals of a piston-cylinder sensor unit (6000) and/or local measurement signals of a valve-arrangement-internal measurement signal unit (5000) and/or valve-arrangement-external process signals of an external sensor unit (4000) for control.

2. Pneutomatic valve arrangement according to patent claim 1, **characterized in that** the electronic valve controller (1) can be connected via an interface to a calculation unit (1000) for data exchange, the calculation unit (1000) being suitable for generating the application (A).

3. Pneumatic valve arrangement according to at least one of the preceding patent claims, **characterized in that** the electronic valve controller (1) and the internal measurement signal unit (5000) are arranged on the valve terminal (VI), the electronic valve controller (1) being intended to receive local measurement signals of the valve arrangement (VS, VI) via the internal measurement signal unit (5000) and to process them for control.

4. Pneutomatic valve arrangement according to at least one of the preceding patent claims, **characterized in that** the piston-cylinder arrangement (11) comprises a piston-cylinder sensor unit (6000) for detecting internal sensor signals, the electronic valve controller (1) being intended, for the purpose of controlling and regulating the valve arrangement (VS, VI) for moving the piston-cylinder arrangement (11), to calculate the detected internal sensor signals for regulation.

5. Pneumatic valve arrangement according to at least one of the preceding patent claims, **characterized in that** the electronic valve controller (1) is used to modify and parameterize the application (A) on the basis of local measurement signals of the valve arrangement (VS, VI) detected on the internal measurement signal unit (5000) and/or on the basis of internal sensor signals of the piston-cylinder sensor unit (6000) and/or on the basis of external process signals of the external sensor unit (4000).

6. Pneumatic valve arrangement according to at least one of the preceding patent claims, **characterized in that** the electronic valve controller (1) is in data exchange with a digital programmable controller (PLC) via a bus system, and **in that** the application (A) loaded onto the electronic valve controller (1) is integrated into a sequence program on the digital programmable controller (PLC), so that the execution of the application (A) on the valve arrangement (VS, VI) can be triggered via the digital programmable controller (PLC), and **in that** further control applications are provided on the digital programmable controller (PLC) which can be loaded onto the electronic valve controller for executing the pneumatic movement task, for executing higher-level functions and for coordination with other units of a technical application system.

7. Method for controlling and regulating a pneumatic valve arrangement (VS, VI) for carrying out a pneumatic movement task, the valve arrangement being a valve terminal, comprising the following method steps:
- Reading in the pneumatic motion task;
- Automatic generation of an executable program code for controlling and regulating the pneumatic valve arrangement (VS, VI) on the basis of the detected pneumatic movement task, accessing a library of application objects (2000, 1004) and
- Loading the executable program code as application (A) in real time on Execution units (1 , 124, SPS) of the valve arrangement (VS, VI),
wherein during the execution of the movement task by means of the valve arrangement (VS, VI) at least two control loops (RKi, RK 2) are used for controlling the valve arrangement (VS, VI):
- A first control loop (RKi), which is implemented in one valve disk (VS) of a valve terminal (Vi) and which calculates sensor signals of the valve disk (VS);
- A second control loop (RK 2), which is integrated in an electronic valve controller (1), and processes sensor signals from a piston-cylinder sensor unit (6000) and/or local measurement signals from an internal measurement signal unit (5000) and/or external process signals from an external sensor unit (4000).

8. Method according to the preceding method claim, wherein the control comprises automatically calculating SET targets from sensed sensor signals, measured signals and/or external process signals.

9. Method according to any one of the preceding method claims, wherein the control of the valve arrangement (VS, VI) is performed in real time.

10. Method according to one of the preceding method claims, in which the application (A) is parameterized and TARGET specifications for parameterizing the application (A) are calculated.

11. Method according to one of the preceding method claims, in which the following operating conditions can be specified for control or regulation, from which SETPOINT specifications are calculated:
- Damping of a piston movement by providing a damping function, especially of a soft stop,
- Speed control of a piston by providing a throttle function to control the piston speed,
- Providing a pressure control and/or a pressure history control,
- Control of an execution time of the motion task ,
- Control of an energy efficiency of the motion task,
- Execution of a movement with intermediate stops and/or separate movement sections
- Control with regard to application-specific parameters to be determined, execution of the motion task for the purpose of diagnosis.

## Revendications

1. Agencement de soupapes pneumatiques comprenant un contrôleur de soupapes électronique (1) pour commander et réguler l'agencement de soupapes pneumatiques (VS, VI) pour une tâche de mouvement pneumatique, **caractérisé en ce que**
une application (A) pour la commande et la régulation de l'agencement de soupapes (VS, VI) peut être chargée ou exécutée sur le contrôleur électronique de soupapes (1) afin de réaliser la tâche de mouvement pneumatique,
dans lequel l'agencement de soupape est un terminal de soupape (VI), dans lequel le terminal de soupape (VI) comprend une pluralité de disques de soupape (VS) et dans lequel, dans chaque cas, un des disques de soupape (VS) est formé avec une pluralité et de préférence quatre ou huit soupapes pneumatiques interconnectées (118), et
dans lequel l'agencement de soupapes comprend une première et une deuxième boucle de commande (RK1, RK2)
- dans lequel la première boucle de régulation (RK1) est mise en oeuvre dans une tête de soupape respective (VS) du terminal de soupape (VI) et est destinée à traiter des signaux de capteur de la tête de soupape (VS) ; et
- dans lequel le deuxième circuit de commande (RK2) est intégré dans la commande électronique de soupape (1) et est destiné à traiter des signaux de capteur d'une unité de capteur piston-cylindre (6000) et/ou des signaux de mesure locaux d'une unité de signal de mesure (5000) interne au dispositif de soupape et/ou à traiter des signaux externes au dispositif de soupape d'une unité de capteur externe (4000) pour la commande.

2. Agencement de vanne pneumatique selon la revendication de brevet 1, **caractérisé en ce que** la commande de vanne électronique (1) peut être reliée par une interface à une unité de calcul (1000) pour l'échange de données, l'unité de calcul (1000) étant appropriée pour générer la demande (A).

3. Agencement de soupapes pneumatiques selon au moins l'une des revendications de brevet précédentes, **caractérisé en ce que** la commande de soupape électronique (1) et l'unité de signal de mesure interne (5000) sont disposées sur le terminal de soupape (VI), la commande de soupape électronique (1) étant destinée à recevoir des signaux de mesure locaux de l'agencement de soupapes (VS, VI) par l'intermédiaire de l'unité de signal de mesure interne (5000) et à les calculer pour la commande.

4. Agencement de soupape pneumatique selon au moins une des revendications précédentes, **caractérisé en ce que** l'agencement piston-cylindre (11) comprend une unité de capteur piston-cylindre (6000) pour détecter des signaux de capteur internes, la commande de soupape électronique (1) étant destinée à calculer les signaux de capteur internes détectés pour commander et réguler l'agencement de soupape (VS, VI) pour déplacer l'agencement piston-cylindre (11).

5. Agencement de soupape pneumatique selon au moins l'une des revendications de brevet précédentes, **caractérisé en ce que** la commande de soupape électronique (1) sert à modifier et à paramétrer l'application (A) sur la base de signaux de mesure locaux de l'agencement de soupape (VS, VI) détectés sur l'unité de signal de mesure interne (5000) et/ou sur la base de signaux de capteur internes de l'unité de capteur piston-cylindre (6000) et/ou sur la base de signaux de processus externes de l'unité de capteur externe (4000).

6. Dispositif de soupape pneumatique selon au moins une des revendications précédentes, **caractérisé en ce que** la commande électronique de soupape (1) est en échange de données avec une commande numérique programmable (PLC) par l'intermédiaire d'un système de bus et **en ce que** l'application (A) chargée sur la commande électronique de soupape (1) est intégrée dans un programme séquentiel sur la commande numérique programmable (PLC) de sorte que l'exécution de l'application (A) sur le dispositif de soupape (VS, VI) peuvent être déclenchées par l'intermédiaire de l'automate programmable numérique (API), et **en ce que** d'autres applications de commande sont prévues sur l'automate programmable numérique (API), qui peuvent être chargées sur la commande de vanne électronique pour exécuter la tâche de mouvement pneumatique, pour exécuter des fonctions de niveau supérieur et pour coordonner avec d'autres unités d'un système d'application technique.

7. Procédé de commande et de régulation d'un dispositif de soupape pneumatique (VS, VI) pour l'exécution d'une tâche de mouvement pneumatique, le dispositif de soupape étant un terminal de soupape, comprenant les étapes de procédé suivantes :
- Lecture dans la tâche de mouvement pneumatique ;
- Génération automatique d'un code de programme exécutable pour la commande et la régulation du dispositif de vanne pneumatique (VS, VI) sur la base de la tâche de mouvement pneumatique enregistrée avec accès à une bibliothèque d'objets d'application (2000, 1004) et
- Chargement du code de programme exécutable comme application (A) en temps réel sur Unités d'exécution (1 , 124, SPS) de l'agencement de soupapes (VS, VI),
dans lequel, pendant l'exécution de la tâche de mouvement au moyen du dispositif de soupape (VS, VI), au moins deux circuits de commande (RKi, RK 2) sont utilisés pour commander le dispositif de soupape (VS, VI) :
- Une première boucle de régulation (RKi), qui est mise en oeuvre dans une tête de soupape (VS) d'un terminal de soupape (Vi) et qui calcule des signaux de capteur de la tête de soupape (VS) ;
- Une deuxième boucle de régulation (RK 2), qui est intégrée dans une commande de soupape électronique (1), et traite des signaux de capteur provenant d'une unité de capteur de piston-cylindre (6000) et/ou des signaux de mesure locaux provenant d'une unité de signal de mesure interne (5000) et/ou des signaux de processus externes provenant d'une unité de capteur externe (4000).

8. Procédé selon la revendication de procédé précédente, dans lequel la commande comprend le calcul automatique de cibles SET à partir de signaux de capteurs détectés, de signaux de mesure et/ou de signaux de processus externes.

9. Procédé selon l'une des revendications de procédé précédentes, dans lequel la commande de l'agencement de soupapes (VS, VI) a lieu en temps réel.

10. Procédé selon l'une des revendications de procédé précédentes, dans lequel l'application (A) est paramétrée et des spécifications TARGET sont calculées pour le paramétrage de l'application (A).

11. Procédé selon l'une des revendications de procédé précédentes, dans lequel les conditions de fonctionnement suivantes peuvent être spécifiées pour la commande ou la régulation, à partir desquelles les spécifications TARGET sont calculées :
- Amortissement du mouvement d'un piston en fournissant un fonction d'amortissement, notamment d'un arrêt en douceur,
- Contrôle de la vitesse d'un piston en fournissant un fonction d'accélérateur pour contrôler la vitesse du piston,
- Fournir un contrôle de la pression et/ou un contrôle de l'historique de la pression,
- Contrôle d'un temps d'exécution de la tâche de mouvement,
- Contrôle d'une efficacité énergétique de la tâche de déplacement,
- Exécution d'un mouvement avec des arrêts intermédiaires et/ou séparés sections de mouvement
- Contrôle, au regard de paramètres spécifiques à l'application à déterminer, de l'exécution de la tâche de mouvement à des fins de diagnostic.
